# EUROPEAN PATENT APPLICATION

(11) **EP 4 654 002 A1**
(43) Date of publication of application: **26.11.2025**
(21) Application number: 25176080.7
(22) Date of filing: 13.05.2025
(51) Int. Cl.: G06F 5/00, G06F 9/00, G06F 7/76, G06F 9/30, H03K 19/00

(54) **SHUFFLING CIRCUIT AND PERMUTATION SHUFFLING DEVICE**

(30) Priority: 20.05.2024 KR 20240065105; 06.08.2024 KR 20240104495
(71) Applicant: Samsung Electronics Co., Ltd., Suwon-si, Gyeonggi-do 16677 (KR)
(72) Inventor: PARK, Jongyeon, Suwon-si (KR)
(74) Representative: Marks & Clerk LLP

(57) **Abstract**

Some example embodiments provide a permutation shuffling device including a random code memory circuit configured to store first to n^{th} random codes, and a first shuffling circuit configured to receive from outside a first input index code including first to n^{th} input index bits, and to generate a first output index code by updating the first to n^{th} input index bits based on the first to n^{th} random codes, respectively.

## Description

### BACKGROUND

Some example embodiments relate to a shuffling circuit for shuffling permutations and/or a permutation shuffling device including the shuffling circuit.

A shuffling algorithm may be used to change an order of a plurality of data. For example, the shuffling algorithm may change the order of a plurality of indexes respectively corresponding to the plurality of data. In some cases, the shuffling algorithm may change the order of the indexes included in a single permutation.

The shuffling algorithms may be used in various technological fields that require or use a random order, such as one or more of, artificial intelligence, security, and games. However, implementations of shuffling algorithms typically require or use an excessively large number of operations, an excessively long time, or an excessively large area of dedicated hardware.

### SUMMARY

Some example embodiments may solve or at least improve upon at least one or more of the technical problems described above. More specifically, some example embodiments attempt to provide a shuffling circuit, which is capable of performing a shuffling operation based on a smaller amount of computation and/or a smaller amount of time with a reduced or minimized area of hardware, and a permutation shuffling device including the shuffling circuit.

There is provided a permutation shuffling device including: a random code memory circuit configured to store first to n^{th} random codes; and a first shuffling circuit configured to receive a first input index code from outside, the first input index code including first to n^{th} input index bits, and to generate a first output index code by updating the first to n^{th} input index bits based on the first to n^{th} random codes, respectively.

Alternatively or additionally, some example embodiments may provide a shuffling circuit including an index register including first to n^{th} index bit fields; a split circuit configured to output a target index bit stored in a target index bit field, the target index bit field being one of the first to n^{th} index bit fields, and to output an operand selection code generated based on index bits stored in non-target index bit fields other than the target index bit field from among the first to n^{th} index bit fields; a multiplexer configured to output, based on the operand selection code, an operand random bit included in a random code provided from outside; and a bit flip circuit configured to generate an update bit based on the target index bit and the operand random bit, and to update the target index bit field based on the update bit.

An Alternatively or additionally, some example embodiments may provide a shuffling circuit configured to receive an input index code and to generate an output index code by performing first to n^{th} bit update stages. The shuffling circuit may comprise an index register including first to n^{th} index bit fields respectively storing first to n^{th} input index bits included in the input index code before the first bit update stage is performed; a multiplexer configured to extract first to n^{th} operand random bits from the first to n^{th} random codes based on the first to n^{th} bit update stages, respectively; and a bit flip circuit configured to generate the output index code by updating the first to n^{th} index bit fields based on the first to n^{th} operand random bits, respectively.

At least some of the above and other features of the invention are set out in the claims.

### BRIEF DESCRIPTION OF THE DRAWINGS

FIG. 1 is a block diagram showing a permutation shuffling device according to some embodiments.
FIG. 2 is a block diagram showing a configuration of an index register of FIG. 1 in more detail.
FIG. 3 illustrates an operation of a shuffling circuit of FIG. 1 in more detail according to some embodiments.
FIG. 4 illustrates an operation of a shuffling circuit of FIG. 1 in more detail according to some embodiments.
FIG. 5 is a block diagram showing a random code memory circuit of FIG. 1 in more detail.
FIG. 6 illustrates an operation method of a shuffling circuit in more detail according to some embodiments.
FIG. 7 is a block diagram showing a configuration of a shuffling circuit of FIG. 1 in more detail.
FIG. 8 illustrates an operation of a split circuit of FIG. 7.
FIG. 9 and FIG. 10 illustrate a method of which the split circuit of FIG. 8 generates an operand selection code in more detail.
FIG. 11 illustrates an operation of a multiplexer of FIG. 7 in more detail.
FIG. 12 is a flowchart showing an operating method of a permutation shuffling device according to some embodiments.
FIG. 13 is a flowchart showing an operation S140 of FIG. 12 in more detail.
FIG. 14 illustrates an operation of a permutation shuffling device in more detail according to some embodiments.
FIG. 15 illustrates an example showing a method for generating plurality of random codes of FIG. 1.
FIG. 16 is a block diagram showing a configuration of a permutation shuffling device according to some example embodiments.
FIG. 17 is a block diagram showing an electronic device including a permutation shuffling device according to some example embodiments.
FIG. 18 illustrates an example of an operation performed in a security module of FIG. 17.
FIG. 19 is a graph showing power consumption waveforms for operations of FIG. 18.

### DETAILED DESCRIPTION

Hereinafter, embodiments will be described clearly and in detail to such an extent that a person skilled in the art can easily practice the present disclosure. Details such as detailed configurations and structures are provided merely to aid in a general understanding of example embodiments. Accordingly, modifications of example embodiments described herein can be made by those skilled in the art without departing from the technical scope. Moreover, descriptions of well-known functions and structures are omitted for clarity and brevity. Components in the drawings or detailed description below may be connected to other components other than those depicted in the drawings or described in the detailed description. Terms used in the text are defined in consideration of functions, and are not limited to specific functions. Definitions of terms may be determined based on matters described in the detailed description.

Components described with reference to terms such as driver and/or block used in the detailed description may be implemented in the form of software, hardware, or a combination thereof. For example, the software may be machine code, firmware, embedded code, and application software. For example, the hardware may include electrical circuits, electronic circuits, processors, computers, integrated circuit cores, pressure sensors, inertial sensors, micro electro mechanical systems (MEMS), passive components, or a combination thereof.

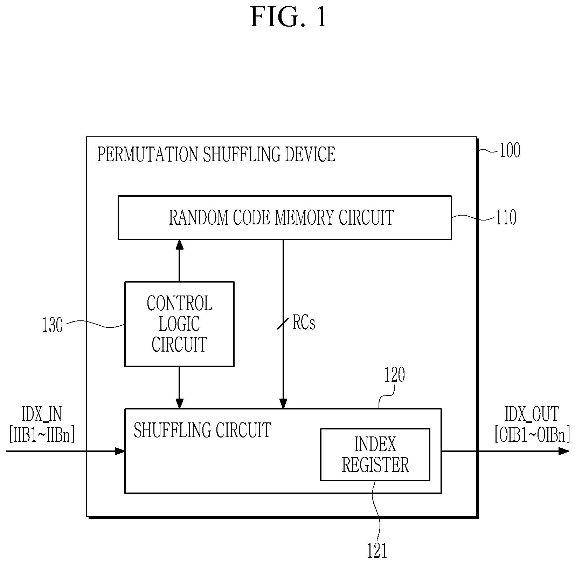

FIG. 1 illustrates a block diagram showing a permutation shuffling device according to some example embodiments. Referring to FIG. 1, the permutation shuffling device 100 may include a random code memory circuit 110, a shuffling circuit 120, and a control logic circuit 130.

In some example embodiments, the permutation shuffling device 100 may be included in an electronic device that drives various types of applications that require or that use randomness of order. For example, the permutation shuffling device 100 may be included in various types of electronic devices, such as one or more of a security module, an artificial intelligence acceleration device, a blockchain device, a quantum device, and the like.

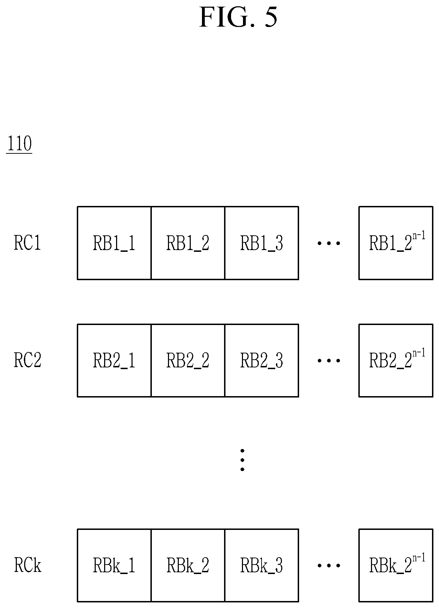

The random code memory circuit 110 may store a plurality of random codes RC. Each of the random codes RC may be implemented as binary code; for example, each of the random codes RC may be or may correspond to a binary string. A code length of each of the plurality of random codes RC may be the same; example embodiments are not limited thereto. A configuration of each of the plurality of random codes RC will be described in more detail with reference to FIG. 5 below.

The shuffling circuit 120 receives an input index code IDX_IN. The input index code IDX_IN including first to n^{th} input index bits IIB1 to IIBn. The shuffling circuit 120 generates an output index code IDX_OUT based on the input index code IDX_IN. The output index code IDX_OUT includes first to n^{th} output index bits OIB1 to OIBn.

In some example embodiments, 'n' may be a code length of the input index code IDX_IN.

In some example embodiments, the input index code IDX_IN may correspond to one of a plurality of indexes included in an input order permutation (hereinafter, referred to as "OP_in"). For example, the input index code IDX_IN may be or may correspond to a binary code representing one of the plurality of indexes included in the input order permutation OP_in. For a more detailed example, the input order permutation OP_in may be a permutation including plurality of consecutive integers such as "0, 1, 2, 3, 4, 5, 6, and 7", and the input index code IDX_IN may be a binary code representing one of "0, 1, 2, 3, 4, 5, 6, and 7".

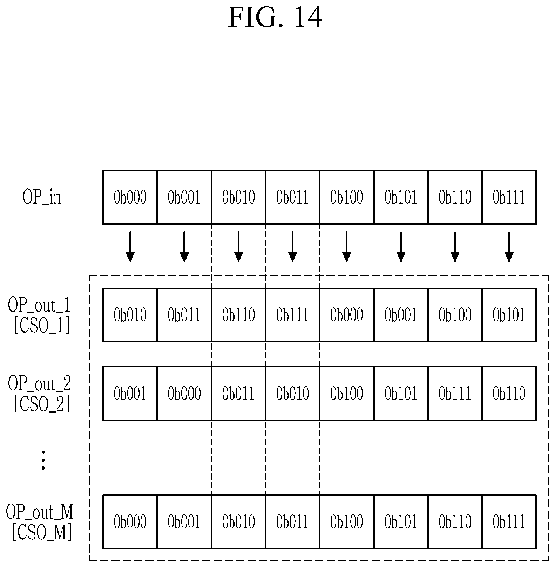

In some example embodiments, the output index code IDX_OUT may correspond to one of a plurality of indexes included in an output order permutation (hereinafter, referred to as "OP_out"). The output order permutation OP_out may be a permutation that includes the indexes included in the input order permutation OP_in in a different order from the input order permutation OP_in, such as "3, 4, 1, 2, 7, 0, 5, and 6". The output index code IDX_OUT may be or may correspond to a binary code representing one of the plurality of indexes included in the output order permutation OP_out. A relationship between the input order permutation OP_in and the output order permutation OP_out will be described in more detail with reference to FIG. 14 below.

The shuffling circuit 120 may include an index register 121. The shuffling circuit 120 may store the first to n^{th} input index bits IIB1 to IIBn in the index register 121. The shuffling circuit 120 may generate the first to n^{th} output index bits OIB1 to OIBn by sequentially updating the first to n^{th} input index bits IIB1 to IIBn stored in the index register 121. For example, the shuffling circuit 120 may generate an output index code IDX_OUT by sequentially updating each bit of the input index code IDX_IN to.

The control logic circuit 130 may control some or all of the overall operations of the permutation shuffling device 100. For example, the control logic circuit 130 may control operations of the random code memory circuit 110 and the shuffling circuit 120.

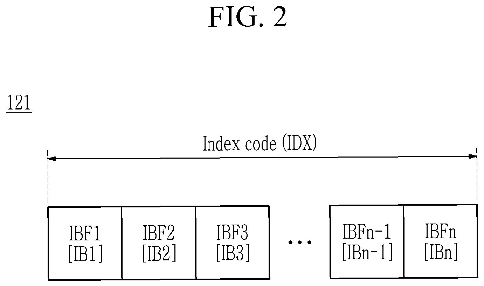

FIG. 2 illustrates a block diagram showing a configuration of an index register of FIG. 1 in more detail. Referring to FIGS. 1 and 2, the index register 121 may store one index code IDX. For example, the index register 121 may include first to n^{th} index bit fields IBF1 to IBFn. Each of the first to n^{th} index bit fields IBF1 to IBFn may store at least one index bit. The index bits stored in the first to n^{th} index bit fields IBF1 to IBFn may be referred to as first to n^{th} index bits IB1 to IBn, respectively.

The first to n^{th} index bits IB1 to IBn may correspond to one index code IDX. For example, the first to n^{th} index bits IB1 to IBn may form one index code IDX. For a more detailed non-limiting example, when 'n' is 3 and the index code stored in the index register 121 is '0b100', the first to third index bits IB1 to IB3 may be '1', '0', and '0', respectively.

The shuffling circuit 120 may store the input index code IDX_IN in the index register 121. For example, the shuffling circuit 120 may store the first to n^{th} input index bits IIB1 to IIBn in the first to n^{th} index bit fields IBF1 to IBFn, respectively. In this case, the first to n^{th} index bits IB1 to IBn may become the first to n^{th} input index bits IIB1 to IIBn, respectively.

The shuffling circuit 120 may generate an output index code IDX_OUT by sequentially updating the first to n^{th} index bit fields IBF1 to IBFn. For example, the shuffling circuit 120 may update the first to n^{th} index bits IB1-IBn to the first to n^{th} output index bits OIB1-OIBn, respectively. That is, the shuffling circuit 120 may update the first to n^{th} input index bits IIB1 to IIBn to the first to n^{th} output index bits OIB1 to OIBn, respectively.

The shuffling circuit 120 outputs the output index code IDX_OUT. For example, the shuffling circuit 120 may output the first to n^{th} output index bits OIB1 to OIBn stored in index register 121.

According to some example embodiments, the shuffling circuit 120 may convert the input index code IDX_IN stored in the index register 121 to the output index code IDX_OUT. For example, each of the input index code IDX_IN and the output index code IDX_OUT may be or may include an index code IDX stored in the index register 121 at different time points. Accordingly, a code length of the output index code IDX_OUT may be the same as a code length of the input index code IDX_IN.

In some example embodiments, the first index bit field IBF1 may be referred to as a most significant bit (MSB) field of the index register 121. The n^{th} index bit field IBFn may be referred to as a least significant bit (LSB) field of the index register 121.

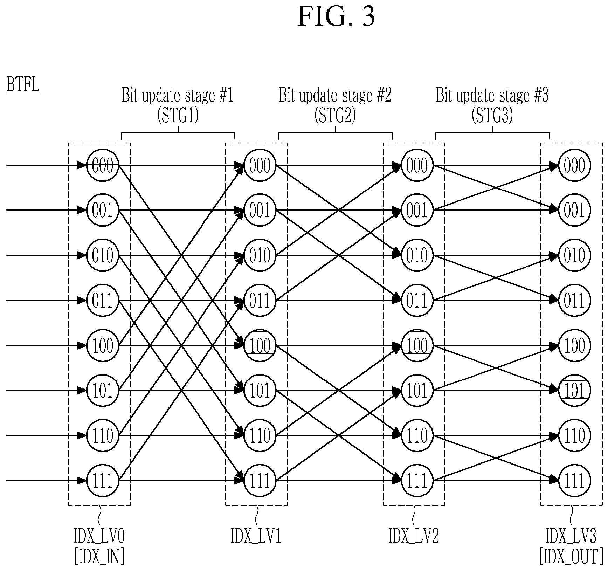

FIG. 3 illustrates an operation of a shuffling circuit of FIG. 1 in more detail according to some example embodiments. Referring to FIG. 3, the shuffling circuit 120 may generate the output index code IDX_OUT in a butterfly network (BTFL) scheme.

When the code length of the input index code IDX_IN is 'n', the shuffling circuit 120 may sequentially perform n-times of bit update stages STG. For example, the shuffling circuit 120 may generate the output index code IDX_OUT by performing first to n^{th} bit update stage STG1 to STGn.

Hereinafter, for a more concise description, after the t-th bit update stage STGt is performed, the index code stored in the index register 121 is referred to as a t-th level index code IDX_LVt (wherein, t is an integer greater than or equal to 1 and less than or equal to n). Meanwhile, the input index code IDX_IN may also be referred to as an 0^{th} level index code IDX_LV0.

Furthermore, for a more concise description, some example embodiments will be described below in which the output index code IDX_OUT is generated based on the input index code IDX_IN with a code length of 3. For example, the shuffling circuit 120 may receive the input index code IDX_IN '0b000', and may perform the first to third bit update stages STG1 to STG3. However, the scope of example embodiments will not be limited to the code length of the input index code IDX_IN. For example, the code length of the input index code IDX_IN may be longer than 3 bits.

The shuffling circuit 120 may update the first to third index bit fields IBF1 to IBF3 based on the first to third bit update stages STG1 to STG3, respectively. For example, the shuffling circuit 120 may sequentially update the most significant bit (MSB) field to the least significant bit (LSB) field of the index register 121 by performing the first to third bit update stages STG1 to STG3.

Before the first bit update stage STG1 being performed, the input index code IDX_IN may be stored in the index register 121. For example, when the input index code IDX_IN is '0b000', the first to third index bits IB1 to IB3 may be '0', '0', and '0', respectively.

The shuffling circuit 120 may generate the first level index code IDX_LV1 by performing the first bit update stage STG1 based on the input index code IDX_IN. For example, the shuffling circuit 120 may generate the first level index code IDX_LV1 by updating (e.g., flipping or changing) the first index bit field IBF1 to '1'. In this case, the first to third index bits IB1 to IB3 may be '1', '0', and '0', respectively.

The shuffling circuit 120 may generate the second level index code IDX_LV2 by performing the second bit update stage STG2 based on the first level index code IDX_LV1. For example, the shuffling circuit 120 may generate the first level index code IDX_LV2 by updating (e.g., maintaining) the first index bit field IBF2 to '0'. The first to third index bits IB1 to IB3 may be '1', '0', and '0', respectively.

Similarly, the shuffling circuit 120 may generate the third level index code IDX_LV3 by performing the third bit update stage STG3 based on the second level index code IDX_LV2. For example, the shuffling circuit 120 may generate the third level index code IDX_LV3 by updating (e.g., changing) the third index bit field IBF3 to '1'. In this case, the first to third index bits IB1 to IB3 may be '1', '0', and '1', respectively.

How the shuffling circuit 120 updates the corresponding index bit field IBF by performing the bit update stage STG may be determined based on the plurality of random codes RC. For example, the shuffling circuit 120 may determine whether to flip or maintain the t-th index bit field IBFt based on the plurality of random codes RC. A scheme in which the shuffling circuit 120 operates based on the plurality of random codes RC will be described in more detail with reference to FIGS. 5 to 11 below.

If the input index code IDX_IN has a code length of 'n' and the shuffling circuit 120 is implemented to generate the output index code IDX_OUT in a butterfly network (BTFL) scheme, the output index code IDX_OUT may be a n^{th} level index code IDX_LVn. For example, if the code length of the input index code IDX_IN is '3', the third level index code IDX_LV3 may become the output index code IDX_OUT.

For a concise description, the operation of the shuffling circuit 120 has been described as a representative example when the input index code IDX_IN is '0b000', but the scope of example embodiments is not limited thereto. For example, the input index code IDX_IN may be any of 3-bit binary code, such as '0b000' or '0b111'. The shuffling circuit 120 may generate the output index code IDX_OUT by performing the first to third bit update stages STG1 to STG3 in a similar manner as described above.

As long as the plurality of random codes RC do not change, the shuffling circuit 120 may convert different input index codes IDX_IN into different output index codes IDX_OUT. More specifically, the shuffling circuit 120 may convert different input index codes IDX_IN into different first level index codes IDX_LV1 by performing the first bit update stage STG1. For example, for each case where the input index code IDX_IN is one of '0b000' to '0b111', the shuffling circuit 120 may generate first level index codes IDX_LV1 differently. In such way, the shuffling circuit 120 may convert the different first level index codes IDX_LV1 into different second level index codes IDX_LV2 by performing the second bit update stage STG2; and may convert different second level index codes IDX_LV2 into different third level index codes IDX_LV3 by performing the third bit update stage STG3. In such way, the input index codes IDX_IN different each other may be converted into output index codes IDX_OUT different each other.

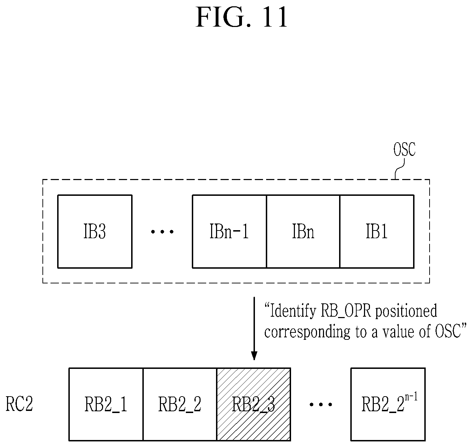

More specifically, the shuffling circuit 120 may convert each of a plurality of (t-1)-th level index codes IDX_LVt-1 different each other into a t-th level index code IDX_LVt different each other by performing a t-th bit update stage STGt. As illustrated in FIG. 3, the shuffling circuit 120 may update a pair of two index codes in same manner, each of which have index bits that only one index bit corresponding to the t-th bit update stages STGt is different each other. For example, the shuffling circuit 120 may perform the first bit update stage STG1 in same manner (e.g., flipping) for cases where the 0^{th} level index code IDX_LV0 is '0b000' or '0b100'; and may perform the second bit update stage STG2 in same manner (e.g., maintaining) for cases where the first level index code IDX_LV1 is '0b100' or '0b110'. The specific manner in which the shuffling circuit 120 updates the pair of two index codes each of which have index bits that only one index bit corresponding to the t-th bit update stages STGt is different each other, may be described in more detail with reference to FIG. 11 below.

In some example embodiments, the shuffling circuit 120 may generate the output index code IDX_OUT even if only one input index code IDX_IN is provided. For example, the shuffling circuit 120 may generate the output index code IDX_OUT corresponding to one input index code IDX_IN even if it does not generate all of the output index codes IDX_OUT for each of the cases where the input index code IDX_IN is '0b000' to '0b111'. That is, even if the shuffling circuit 120 does not generate a plurality of output index codes IDX_OUT corresponding to each of the input index codes IDX_IN included in one input order permutation OP_in, it may generate one output index code IDX_OUT corresponding to a specific input index code IDX_IN. Accordingly, according to some example embodiments, an amount of computation and a time required for shuffling of the permutation shuffling device 100 may be minimized, and the permutation shuffling device 100 may be implemented to generate one output index code IDX_OUT in real time whenever one input index code IDX_IN is provided.

In some example embodiments, the shuffling circuit 120 may perform a shuffling operation in a manner corresponding to a butterfly network (BTFL) without a circuit configuration corresponding to a plurality of 2×2 switches. In this case, the permutation shuffling device 100 may be implemented in a smaller area.

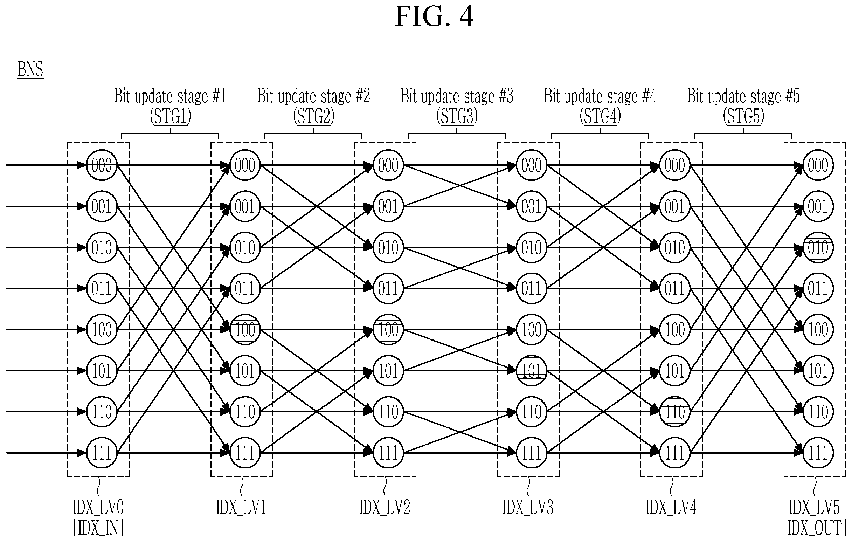

FIG. 4 illustrates an operation of a shuffling circuit of FIG. 1 in more detail according to some example embodiments. Referring to FIG. 4, the shuffling circuit 120 may generate the output index code IDX_OUT in a Benes network (BNS) scheme. Hereinafter, a difference between the way the shuffling circuit 120 generates the output index code IDX_OUT using a butterfly network (BTFL) scheme and the way the shuffling circuit 120 generates the output index code IDX_OUT using a Benes network (BNS) method will be mainly described.

When the code length of the input index code IDX_IN is '2n-1', the shuffling circuit 120 may sequentially perform (2n-1) times of bit update stages STG. For example, the shuffling circuit 120 may generate the output index code IDX_OUT by performing first to (2n-1)-th bit update stages STG1 to STG2n-1. In this case, the output index code IDX_OUT may be a (2n-1)-th level index code IDX_LV2n-1.

The shuffling circuit 120 may update each index bit field of the index register 121 by performing the first to (2n-1)-th bit update stages STG1 to STG2n-1. For example, the shuffling circuit 120 may update the first to n^{th} index bit fields IBF1 to IBFn by performing the first to n^{th} bit update stages STG1 to STGn, respectively; and may update the (n-1)-th to first index bit fields IBFn-1 to IBF1 by performing the (n+1)-th to (2n-1)-th bit update stages STGn+1 to STG2n-1.

For a more concise description, some example embodiments will be described below in which the output index code IDX_OUT is generated based on the input index code IDX_IN with a code length of '3'. For example, the shuffling circuit 120 may receive an input index code IDX_IN '0b000'. In this case, the shuffling circuit 120 may update the second index bit field IBF2 by performing the fourth bit update stage STG4, and then may update the first index bit field IBF1 by performing the fifth bit update stage STG5. The first to third bit update stages STG1 to STG3 may be similar to those described above with reference to FIG. 3, so a detailed description will be omitted.

The shuffling circuit 120 may generate the fourth level index code IDX_LV4 by performing the fourth bit update stage STG4 based on the third level index code IDX_LV3. For example, the shuffling circuit 120 may generate the fourth level index code IDX_LV4 by updating (e.g., flipping) the second index bit field IBF2 to '1'. In this case, the first to third index bits IB1 to IB3 may be '1', '1', and '0', respectively.

The shuffling circuit 120 may generate the fifth level index code IDX_LV5 by performing the fifth bit update stage STG5 based on the fourth level index code IDX_LV4. For example, the shuffling circuit 120 may generate the fifth level index code IDX_LV5 by updating (e.g., flipping or changing) the first index bit field IBF1 to '1'. In this case, the first to third index bits IB1 to IB3 may be '0', '1', and '0', respectively.

In some example embodiments, the shuffling circuit 120 may generate the output index code IDX_OUT by performing the fourth and fifth bit update stages STG4 to STG5 after performing the first to third bit update stages STG1 to STG3 described above with reference to FIG. 3. A method of which the shuffling circuit 120 performs each bit update stage STG has been described above with reference to FIG. 3, so a detailed description will be omitted.

FIG. 5 illustrates a block diagram showing a random code memory circuit of FIG. 1 in more detail. Referring to FIGS. 1 to 5, the random code memory circuit 110 may store the plurality of random codes RC. For example, the random code memory circuit 110 may include first to k^{th} random codes RC1 to RCk.

The first to k^{th} random codes RC1 to RCk may be used in the first to k^{th} bit update stages STG1 to STGk, respectively. 'k' may be determined depending on how the shuffling circuit 120 operates. More specifically, 'k' may be determined based on a number of bit update stages STGs that the shuffling circuit 120 performs to generate the output index code IDX_OUT. For example, if the shuffling circuit (120) operates in a butterfly network (BTFL) scheme, 'k' may be 'n'. If the shuffling circuit 120 operates in a Benes network (BNS) scheme, 'k' may be '2n-1'.

Each of the first to k^{th} random codes RC1 to RCk may include a plurality of random bits RB. A code length of each of the first to k^{th} random codes RC1 to RCk may be 2ⁿ⁻¹. For example, each of the first to k^{th} random codes RC1 to RCk may include 2ⁿ⁻¹ random bits RB. For example, the first random code RC1 may include random bits RB1_1 to RB1_2ⁿ⁻¹, and the second random code RC2 may include random bits RB2_1 to RB2_2ⁿ⁻¹.

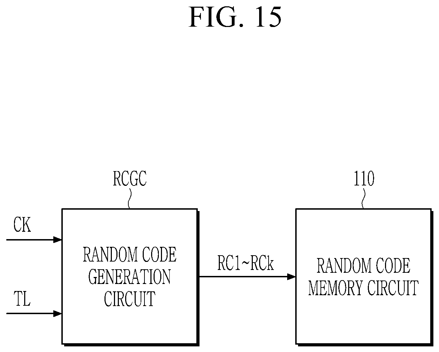

In some example embodiments, the first to k^{th} random codes RC1 to RCk may be generated collectively (e.g., simultaneously). For example, the first to k^{th} random codes RC1 to RCk may be generated collectively by providing a specific encryption key to a hash function. In this case, entropy of the first to k^{th} random codes RC1 to RCk may be guaranteed. A more specific method in which the first to k^{th} random codes RC1 to RCk are generated collectively will be described in more detail with reference to FIG. 15 below.

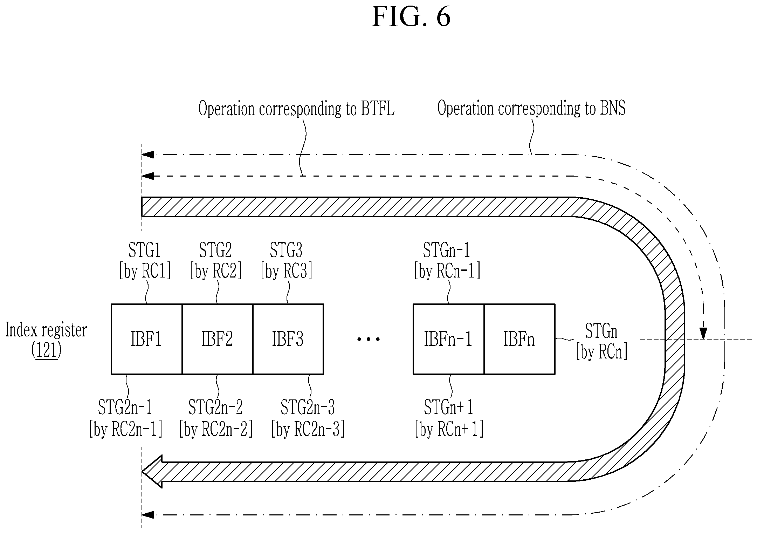

FIG. 6 illustrates an operation method of a shuffling circuit in more detail according to some example embodiments. Referring to FIGS. 1 to 6, the index register 121 may include first to n^{th} index bit fields IBF1 to IBFn.

The shuffling circuit 120 may sequentially perform a plurality of bit update stages STG. The shuffling circuit 120 may update one index bit field IBF when it performs single bit update stage STG.

The shuffling circuit 120 may sequentially perform the first to n^{th} bit update stages STG1 to STGn based on the first to n^{th} random codes RC1 to RCn, respectively. In this case, the shuffling circuit 120 may update the first index bit field IBF1 by performing the first bit update stage STG1 based on the first random code RC1; and then may update the second index bit field IBF2 by performing the second bit update stage STG2 based on the second random code RC2. In this way, the shuffling circuit 120 may update the n^{th} index bit field IBFn by performing the n^{th} bit update stage STGn based on the n^{th} random code RCn.

When the shuffling circuit 120 operates in the butterfly network (BTFL) scheme, the index code stored in the index register 121 may become the output index code IDX_OUT after the n^{th} bit update stage STGn is completed. For example, when the shuffling circuit 120 operates in a butterfly network (BTFL) scheme, the shuffling circuit 120 may update each of the first to n^{th} index bit fields IBF1 to IBFn only once.

When the shuffling circuit 120 operates in the Benes network (BNS) scheme, after the n^{th} bit update stage STGn is completed, the shuffling circuit 120 may further perform the (n+1)^{th} to (2n-1)^{th} bit update stages STGn+1 to STG2n-1. For example, the shuffling circuit 120 may update the (n-1)^{th} index bit field IBFn-1 by performing the (n+1)^{th} bit update stage STGn+1 based on the (n+1)^{th} random code RCn+1, and then may update the (n-2)^{th} index bit field IBF2 by performing the (n+2)^{th} bit update stage STGn+2 based on the (n+2)^{th} random code RCn+2. In this way, the shuffling circuit 120 may update the first index bit field IBF1 by performing the (2n-1)^{th} bit update stage STG2n-1 based on the (2n-1)^{th} random code RC2n-1. In this case, after the (2n-1)^{th} bit update stage STG2n-1 is completed, the index code stored in the index register 121 may become the output index code IDX_OUT. For example, when the shuffling circuit 120 operates in the Benes network (BNS) scheme, each of the first to (n-1)^{th} index bit fields IBF1 to IBFn-1 may be updated twice, and the n^{th} index bit field IBFn may be updated once.

In some example embodiments, the shuffling circuit 120 may perform one or more bit update stages after performing the (2n-1)^{th} bit update stage STG2n-1. In this case, after all the bit update stages STG are completed, the index code stored in the index register 121 may become the output index code IDX_OUT. For example, the shuffling circuit 120 may perform the (2n-1)^{th} bit update stage STG2n-1, and then may further perform (2n)^{th} to (3n-2)^{th} bit update stages (not shown) to sequentially update the second to n^{th} index bit fields IBF2 to IBFn. Furthermore, the shuffling circuit 120 may further perform (3n-1)^{th} to (4n-3)^{th} bit update stages (not shown) to sequentially update the (n-1)^{th} to first index bit fields IBFn-1 to IBF1. That is, the shuffling circuit 120 may repeatedly update the first to n^{th} index bit fields IBF1 to IBFn by performing the plurality of bit update stages STG. However, the scope is not limited to the specific manner and order in which the shuffling circuit 120 traverses and updates the first to n^{th} index bit fields IBF1 to IBFn.

In some example embodiments, a total number of the plurality of bit update stages STG performed by the shuffling circuit 120 (e.g., 'k') may be referred to as a shuffling depth. For example, if the shuffling circuit 120 operates in the butterfly network (BTFL) scheme, the shuffling depth may be 'n'. If the shuffling circuit 120 operates in the Benes network (BNS) scheme, the shuffling depth may be '2n-1'. However, the scope is not limited thereto. For example, the shuffling circuit 120 may operate in any manner, and the shuffling depth may be any integer.

In some example embodiments, an operation speed of the shuffling circuit 120 may vary depending on the shuffling depth. For example, as the shuffling depth decreases, the shuffling circuit 120 may generate the output index code IDX_OUT at a faster speed.

In some example embodiments, a capacity and size of the random code memory circuit 110 may vary depending on the shuffling depth. For example, as the shuffling depth is smaller, the random code memory circuit 110 may be implemented with a smaller capacity and a smaller size.

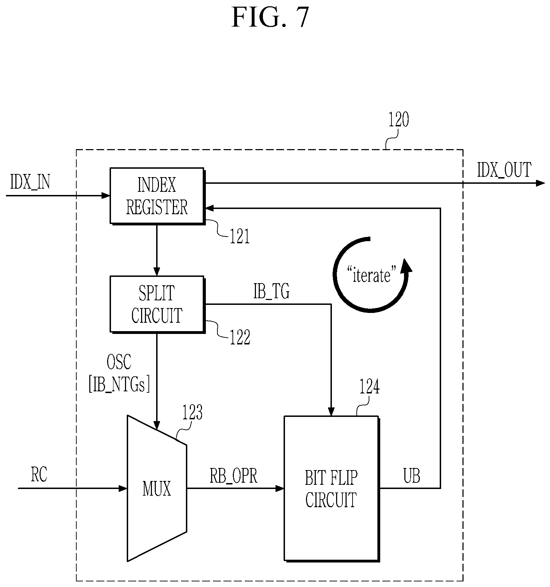

FIG. 7 illustrates a block diagram showing a configuration of a shuffling circuit of FIG. 1 in more detail. Referring to FIGS. 1 to 7, the shuffling circuit 120 may include an index register 121, a split circuit 122, a multiplexer 123, and a bit flip circuit 124.

The index register 121 may receive the input index code IDX_IN. The index register 121 may store the first to n^{th} input index bits IIB1 to IIBn in the first to n^{th} index bit fields IBF1 to IBFn, respectively. In this case, the first to n^{th} index bits IB1 to IBn may be the first to n^{th} input index bits IIB1 to IIBn, respectively.

The shuffling circuit 120 may sequentially perform the plurality of bit update stages STG based on the control of the control logic circuit 130. For example, the control logic circuit 130 may instruct the shuffling circuit 120 to perform one bit update stage STG. In this case, the shuffling circuit 120 may perform the bit update stage STG instructed by the control logic circuit 130; and after the bit update stage STG is completed, the control logic circuit 130 may instruct the shuffling circuit 120 to perform the next bit update stage STG. In this way, after the plurality of bit update stages STG are completed, the first to n^{th} index bits IB1 to IBn stored in the index register 121 may indicate the output index code IDX_OUT. In this case, the shuffling circuit 120 may output the output index code IDX_OUT. Hereinafter, a method of which the shuffling circuit 120 performs one bit update stage STG will be described specifically.

The split circuit 122 may read the index register 121. For example, the split circuit 122 may read the first to n^{th} index bits IB1 to IBn before the one bit update stage STG is performed.

The split circuit 122 may determine one of the first to n^{th} index bits IB1 to IBn as a target index bit IB_TG based on the bit update stage STG indicated by the control logic circuit 130. For example, the split circuit 122 may determine an index bit stored in an index bit field (hereinafter referred to as a target index bit field IBF_TG) corresponding to the bit update stage STG indicated by the control logic circuit 130 as the target index bit IB_TG. For a more detailed example, when the control logic circuit 130 instructs to perform the second bit update stage STG2, the split circuit 122 may determine the second index bit IB2 as the target index bit IB_TG. The split circuit 122 may provide the target index bit IB_TG to the bit flip circuit 124.

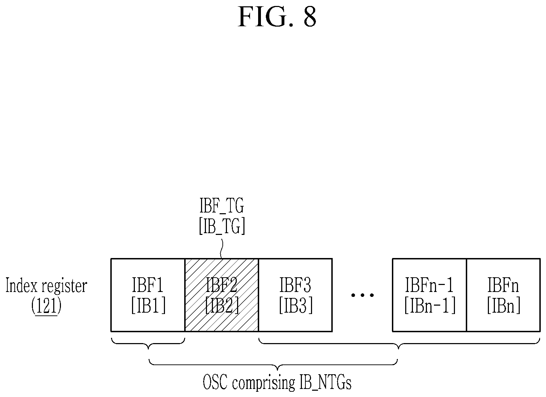

The split circuit 122 may determine remaining index bits, excluding the target index bit IB_TG, among the first to n^{th} index bits IB1 to IBn, as non-target index bits IB_NTG. The split circuit 122 may generate an operand selection code OSC based on the non-target index bits IB_NTG. The split circuit 122 may provide the operand selection code OSC to the multiplexer 123. A method of generating the operand selection code OSC will be described in more detail with reference to FIGS. 8 to 10 below.

In some example embodiments, among the first to n^{th} index bit fields IBF1 to IBFn, remaining index bit fields except for the target index bit field IBF_TG may be referred to as non-target index bit fields.

The multiplexer 123 may receive one random code RC based on the bit update stage STG indicated by the control logic circuit 130. For example, the multiplexer 123 may receive a random code RC corresponding to the bit update stage STG indicated by the control logic circuit 130. For example, when the control logic circuit 130 instructs to perform the second bit update stage STG2, the multiplexer 123 may receive a second random code RC2 from the random code memory circuit 110.

The multiplexer 123 may extract one random bit RB from the random code RC based on the operand selection code OSC. For example, the multiplexer 123 may output a random bit RB as an operand random bit RB_OPR, at a position corresponding to a value of the operand selection code OSC among the random bits RB included in the random code RC. For a more detailed example, the multiplexer 123 may output one of a plurality of random bits RB2_1 to RB2_2n-1 included in the second random code RC2 as an operand random bit RB_OPR based on the operand selection code OSC. A method of selecting one operand random bit RB_OPR based on the operand selection code OSC will be described in more detail with reference to FIG. 11 below.

The bit flip circuit 124 may receive the target index bit IB_TG and the operand random bit RB_OPR. The bit flip circuit 124 may generate an update bit UB based on the target index bit IB_TG and the operand random bit RB_OPR. For example, the bit flip circuit 124 may generate an update bit UB by determining whether to flip the target index bit IB_TG based on the operand random bit RB_OPR.

The bit flip circuit 124 may provide the update bit UB to the index register 121. For example, the bit flip circuit 124 may update the target index bit field IBF_TG based on the update bit UB. In this case, one bit update stage STG may be completed.

In some example embodiments, the bit flip circuit 124 may be implemented as an XOR gate including a first input terminal receiving the target index bit IB_TG, a second input terminal including the operand random bit RB_OPR, and an output terminal outputting the update bit UB. In this case, the bit flip circuit 124 may generate the update bit UB by flipping the target index bit IB_TG in response to the operand random bit RB_OPR being '1', and may generate the update bit UB by maintaining the target index bit IB_TG in response to the operand random bit RB_OPR being '0'.

In some example embodiments, instead of receiving the target index bit IB_TG from the split circuit 122, the bit flip circuit 124 may receive the target index bit IB_TG from the index register 121 in response to a control of the control logic circuit 130. For example, the scope of example embodiments is not limited to a specific path along which the target index bit IB_TG is provided to the bit flip circuit 124.

After one bit update stage STG is completed, the shuffling circuit 120 may perform a next bit update stage STG based on another target index bit IB_TG and another random code RC. For example, according to some example embodiments, the shuffling circuit 120 may repeatedly perform the bit update stage STG by changing the target index bit IB_TG and the random code RC for each repetition.

More specifically, by performing the plurality of bit update stages STG, the bit flip circuit 124 may update each of the first to nth index bit fields IBF1 to IBFn to generate the output index code IDX_OUT. For example, by updating each of the first to n^{th} index bit fields IBF1 to IBFn, the bit flip circuit 124 may convert the input index code IDX_IN stored in the index register 121 into the output index code IDX_OUT.

After all the bit update stages STG are completed (e.g., after the index register 121 is updated based on all the random codes RC stored in the random code memory circuit 110), the shuffling circuit 120 may output the output index code IDX_OUT stored in the index register 121.

According to some example embodiments, the shuffling circuit 120 may operate repeatedly a number of times corresponding to the shuffling depth. For example, according to some example embodiments, the number of times the shuffling circuit 120 repeatedly operates may be minimized. In this case, a time taken by the shuffling circuit 120 to generate the output index code IDX_OUT may be minimized. For example, the shuffling circuit 120 may generate the output index code IDX_OUT at a faster speed than that of a Fisher-Yates shuffling algorithm or a Knuth shuffling algorithm.

FIG. 8 illustrates an operation of a split circuit of FIG. 7. Referring to FIGS. 1 to 8, the split circuit 122 may read the first to n^{th} index bit fields IBF1 to IBFn of the index register 121.

The split circuit 122 may determine an index bit stored in one of the first to n^{th} index bit fields IBF1 to IBFn as the target index bit IB_TG, based on the bit update stage STG indicated by the control logic circuit 130. For example, the split circuit 122 may determine the second index bit IB2 as the target index bit IB_TG.

The split circuit 122 may determine index bits stored in remaining index bit fields among the first to n^{th} index bit fields IBF1 to IBFn, that do not store the target index bit IB_TG, as non-target index bits IB_NTG. For example, if the second index bit IB2 is the target index bit IB_TG, the split circuit 122 may determine the first index bit IB1 and the third to n^{th} index bits IB3 to IBn as the non-target index bits IB_NTG.

The split circuit 122 may generate an operand selection code OSC based on the non-target index bits IB_NTG. In this case, the operand selection code OSC may include the non-target index bits IB_NTG.

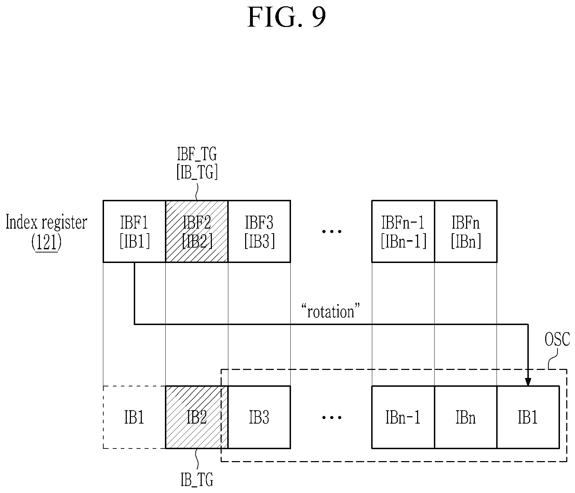

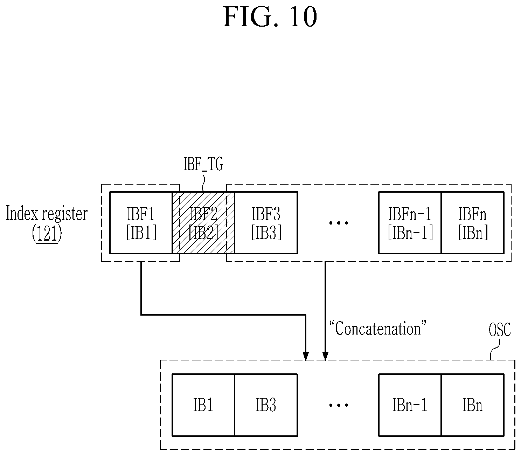

In some example embodiments, the non-target index bits IB_NTG may be arranged within the operand selection code OSC based on a predetermined rule. That is, an order in which the non-target index bits IB_NTG are arranged within the operand selection code OSC may be determined by a predetermined rule. An example of specific method in which the split circuit 122 generates the operand selection code OSC based on the non-target index bits IB_NTG will be described with reference to FIGS. 9 and 10 below.

FIG. 9 and FIG. 10 illustrate a method of which the split circuit of FIG. 8 generates an operand selection code in more detail. Hereinafter, for a more concise description, an index bit field including the target index bit IB_TG is referred to as the target index bit field IBF_TG. For example, if the second index bit IB2 is the target index bit IB_TG, the second index bit field IBF2 may be referred to as the target index bit field IBF_TG.

Referring to FIG. 9, the split circuit 122 may generate the operand selection code OSC in a rotation manner. For example, the split circuit 122 may generate the operand selection code OSC based on a result of left rotating the first to n^{th} index bits IB1 to IBn by a number of index bit fields having a higher position value than that of the target index bit field IBF_TG (e.g., more significant bit fields). For example, the split circuit 122 may generate the operand selection code OSC based on a result of left rotating index bits stored in index bit fields having a higher position value than that of the target index bit field IBF_TG.

For a more detailed example, if the target index bit field IBF_TG is the second index bit field IBF2, a number of index bit fields having a higher position value than that of the target index bit field IBF_TG may be '1' (e.g., the first index bit field IBF1). In this case, the split circuit 122 may left rotate the first to n^{th} index bits IB1 to IBn by '1' bit. For example, the split circuit 122 may move the first index bit IB1 to a least significant bit (LSB) position.

The split circuit 122 may generate the operand selection code OSC by deleting (e.g., dropping) the target index bit IB_TG from the rotation result. For example, the split circuit 122 may delete a bit at a most significant bit (MSB) position of the rotation result. In this case, the operand selection code OSC may include the third to n^{th} index bits IB3 to IBn and the first index bit IB1 in that order.

Referring to FIGS. 1 to 8 and FIG. 10, the split circuit 122 may generate the operand selection code OSC in a concatenation manner. For example, the split circuit 122 may concatenate the non-target index bits IB_NTG to generate the operand select code OSC.

For a more detailed example, if the target index bit field IBF_TG is the second index bit field IBF2, the split circuit 122 may generate the operand selection code OSC by sequentially concatenating the first index bit IB1 and the third to n^{th} index bits IB1 to IBn.

For example, referring to FIGS. 9 and 10, bit position of each of the non-target index bits IB_NTG included in the operand selection code OSC may vary depending on a method of which the split circuit 122 generates the operand selection code OSC. Example embodiments are not limited to the bit positions of each of the non-target index bits IB_NTG included in the operand selection code OSC.

Furthermore, for a more concise description, in FIG. 9 and FIG. 10, some example embodiments of generating the operand selection code OSC in a rotation and concatenation manner will be described as a representative example, but the scope is not limited thereto. For example, the split circuit 122 may perform various types of binary code operations or bit operations based on the non-target index bits IB_NTG to generate the operand selection code OSC. However, for a more concise description, it is assumed that the split circuit 122 generates the operand selection code OSC in the rotation manner described above with reference to FIG. 9.

FIG. 11 illustrates an operation of a multiplexer of FIG. 7 in more detail. Referring to FIG. 1 to FIG. 11, the multiplexer 123 may receive one random code RC based on the bit update stage STG indicated by the control logic circuit 130. For example, when the control logic circuit 130 instructs to perform the second bit update stage STG2, the multiplexer 123 may receive a second random code RC2 from the random code memory circuit 110.

The multiplexer 123 may select one operand random bit RB_OPR included in a received random code RC based on an operand selection code OSC. For example, the multiplexer 123 may identify the operand random bit RB_OPR from the second random code RC2 based on a value of the operand selection code OSC. In more detail, the multiplexer 123 may determine a random bit at a position (e.g., order) corresponding to the value of the operand selection code OSC among a plurality of random bits RB2_1 to RB2_2n-1 included in the second random code RC2, as the operand random bit RB_OPR. For example, if the value of the operand selection code OSC is 'a', the multiplexer 123 may determine a random bit RB2_a as the operand random bit RB_OPR.

Thereafter, the bit flip circuit 124 may update the target index bit IB_TG based on the operand random bit RB_OPR. When the target index bit IB_TG is updated, one bit update stage STG may be completed.

For example, according to some example embodiments, the operand random bit RB_OPR may be determined based on remaining index bits excluding the target index bit IB_TG among the index bits stored in the index register 121. In this case, the bit flip circuit 124 may update a pair of two index codes with different target index bits IB_TG based on the same operand random bit RB_OPR. For example, when the second bit update stage STG2 is performed, both i) 'in a case where the first index code is stored in the index register 121', and ii) 'in a case where the second index code, which is only different from the first index code by the second index bit IB2, is stored in the index register 121', the shuffling circuit 120 may update the second index bit IB2 based on the same operand random bit RB_OPR. For a more detailed example, if the first index code is '0b100' and the second index code is '0b110', the shuffling circuit 120 may determine the operand random bit RB_OPR based on the remaining bits (e.g., MSB bit '1' and LSB bit '0') except the target index bit IB_TG of the first index code and the second index code, and thus it may update the second index bit IB2 in the same manner (e.g., maintaining or flipping). Accordingly, according to some example embodiments, the shuffling circuit 120 may sequentially perform a plurality of bit update stages STG in a manner corresponding to a butterfly network (BTFL) and/or a Benes network (BNS).

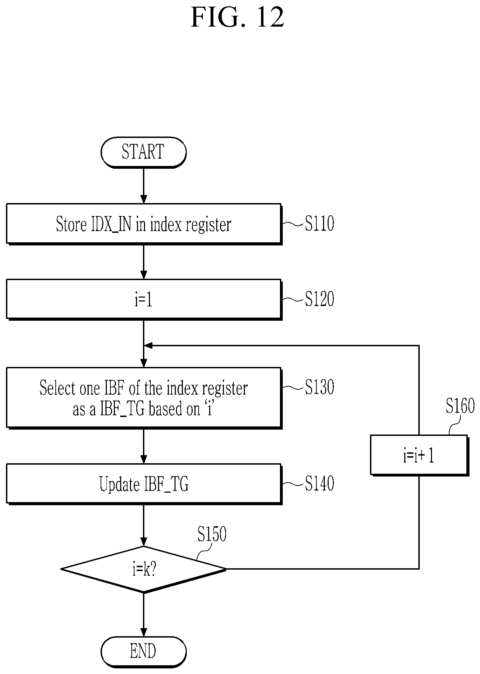

FIG. 12 illustrates a flowchart showing an operating method of a permutation shuffling device according to some example embodiments. Referring to FIGS. 1 to 12, at operation S110, the permutation shuffling device 100 may store the input index code IDX_IN in an index register 121. For example, the shuffling circuit 120 may store the first to n^{th} input index bits IIB1 to IIBn in the first to n^{th} index bit fields IBF1 to IBFn, respectively. In this case, the first to n^{th} index bits IB1 to IBn may become the first to n^{th} input index bits IIB1 to IIBn, respectively.

At operation S120, the permutation shuffling device 100 may set a variance 'i' to 1. The variance 'i' is merely intended to describe a repetitive operation of the permutation shuffling device 100 (e.g., bit update stage STG), and does not limit the scope.

At operation S130, the permutation shuffling device 100 may select one index bit field IBF of the index register 121 as the target index bit field IBF_TG based on the variance 'i'. For example, the control logic circuit 130 may instruct the shuffling circuit 120 to perform the i^{th} bit update stage STGi. The shuffling circuit 120 may select the index bit field IBF corresponding to the i^{th} bit update stage STGi as the target index bit field IBF_TG based on the control of the control logic circuit 130.

In some example embodiments, when 'i' is smaller than or equal to 'n', the target index bit field IBF_TG corresponding to the i^{th} bit update stage STGi may be the i^{th} index bit field IBFi. That is, when the shuffling circuit 120 performs a shuffling operation in a manner corresponding to a butterfly network (BTFL), the shuffling circuit 120 may sequentially update the first to n^{th} index bit fields IBF1 to IBFn.

In some example embodiments, when 'i' is greater than 'n' and smaller than or equal to '2n-1', the target index bit field IBF_TG corresponding to the i^{th} bit update stage STGi may be the (2n-i)^{th} index bit field IBF2n-i. That is, when the shuffling circuit 120 performs a shuffling operation in a manner corresponding to a butterfly network (BNS), the shuffling circuit 120 may sequentially update the first to n^{th} index bit fields IBF1 to IBFn, and then may sequentially update the (n-1)^{th} to first index bit fields IBFn-1 to IBF1.

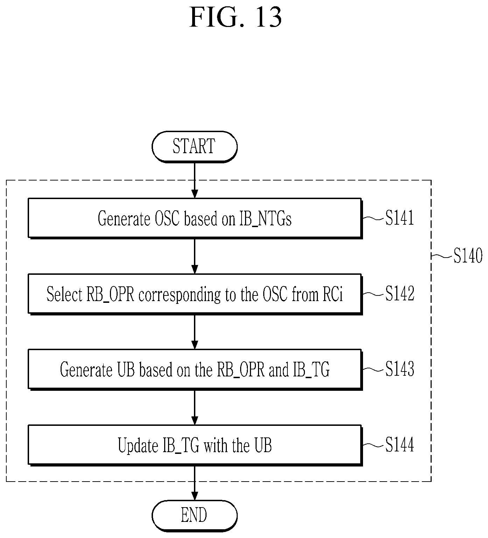

At operation S140, the permutation shuffling device 100 may update the target index bit field IBF_TG. For example, the shuffling circuit 120 may maintain or flip the target index bit IB_TG stored in the target index bit field IBF_TG. Operation S140 will be described in more detail with reference to FIG. 13 below.

In some example embodiments, operations S130 and S140 may correspond to one bit update stage STG.

At operation S150, the permutation shuffling device 100 may determine whether the variance 'i' is 'k'. For example, the control logic circuit 130 may determine whether all 'k' bit update stages STGs have been performed. In this case, 'k' may be a predetermined integer.

In some example embodiments, when the shuffling circuit 120 performs the shuffling operation in the manner corresponding to the butterfly network (BTFL), 'k' may be 'n'. When the shuffling circuit 120 performs the shuffling operation in the manner corresponding to the Benes network (BNS), 'k' may be '2n-1'. However, the scope is not limited thereto. For example, 'k' may be any integer.

At operation S150, if it is determined that variance 'i' is not 'k', following operation S160 may be performed.

At operation S160, the permutation shuffling device 100 may increase the variance 'i' by 1. Thereafter, the permutation shuffling device 100 may repeat operations S130 and S140 described above. In this way, the permutation shuffling device 100 may sequentially perform the bit update stages STG.

If it is determined that the variance 'i' is 'k' at operation S150, the operation of the permutation shuffling device 100 may be terminated. In this way, the permutation shuffling device 100 may sequentially perform the first to k^{th} bit update stages STG1 to STGk. In this case, the output index code IDX_OUT may be stored in the index register 121 of the permutation shuffling device 100.

FIG. 13 illustrates a flowchart showing an operation S140 of FIG. 12 in more detail. Referring to FIGS. 1 to 13, operation S140 may include operations S141 to S144 below.

At operation S141, the shuffling circuit 120 may generate the operand selection code OSC based on the non-target index bits IB_NTGs. For example, the split circuit 122 may generate the operand select code OSC by concatenating or rotating the non-target index bits IB_NTG.

At operation S142, the shuffling circuit 120 may select the operand random bit RB_OPR corresponding to the operand selection code OSC from the i^{th} random code RCi. For example, the multiplexer 123 may output a random bit having an order corresponding to a value of the operand random bit RB_OPR among a plurality of random bits RBi_1 to RBi_2n-1 included in the i^{th} random code RCi as the operand random bit RB_OPR.

At operation S143, the shuffling circuit 120 may generate an update bit UB based on the target index bit IB_TG and the operand random bit RB_OPR. For example, the bit flip circuit 124 may generate an update bit UB by performing an XOR operation on the target index bit IB_TG and the operand random bit RB_OPR.

At operation S144, the shuffling circuit 120 may update the target index bit field IBF_TG based on the update bit UB. For example, the bit flip circuit 124 may overwrite the target index bit field IBF_TG of the index register 121 with the update bit UB.

FIG. 14 illustrates an operation of a permutation shuffling device in more detail according to some example embodiments. Referring to FIGS. 1 to 14, the permutation shuffling device 100 may generate the output order permutation OP_out by shuffling the input order permutation OP_in including a plurality of input index codes IDX_IN based on a plurality of random codes RC. For example, the permutation shuffling device 100 may generate the output order permutation OP_out by sequentially generating a plurality of output index codes IDX_OUT corresponding to the plurality of input index codes IDX_IN, respectively. For example, the permutation shuffling device 100 may generate the plurality of output index codes IDX_OUT '0b010', '0b011', '0b110', '0b111', '0b000', '0b001', '0b100', '0b101' based on the plurality of input index codes IDX_IN '0b000' to '0b111', respectively. In this case, '0b010', '0b011', '0b110', '0b111', '0b000', '0b001', '0b100', and '0b101' may form a first output order permutation OP_out_1.

In some example embodiments, a position of a specific output index code IDX_OUT within the output order permutation OP_out may correspond to a position in the input order permutation OP_in of the input index code IDX_IN corresponding to the output index code IDX_OUT. For example, the output index code IDX_OUT generated by the permutation shuffling device 100 based on the first input index code DX_IN in the input order permutation OP_in may correspond to the first output index code IDX_OUT of the output order permutation OP_out.

Meanwhile, when the random codes RC are changed, the output order permutation OP_out generated by the permutation shuffling device 100 based on the input order permutation OP_in may be changed. For example, the permutation shuffling device 100 may generate a plurality of output index codes IDX_OUT '0b001', '0b000', '0b011', '0b010', '0b100', '0b101', '0b111', '0b110' based on a plurality of input index codes IDX_IN '0b000' to '0b111', respectively. In this case, '0b001', '0b000', '0b011', '0b010', '0b100', '0b101', '0b111', and '0b110' may form a second output order permutation OP_out_2.

In this way, as the random codes RC are changed, the permutation shuffling device 100 may generate one of the first to M^{th} output order permutations OP_OUT_1 to OP_OUT_M.

In some example embodiments, 'M' may be determined based on 'k'.

In some example embodiments, when 'k' is 'n', M may be smaller than 2" factorial (2ⁿ!). That is, if the shuffling circuit 120 operates in the butterfly network (BTFL) scheme, a number of cases in which the permutation shuffling device 100 arranges a total of 2" different n-bits input index codes IDX_IN may be smaller than a number of all cases in which an order of 2ⁿ input index codes IDX_IN.

In some example embodiments, when 'k' is '2n-1', M may be smaller than 2" factorial (2ⁿ!). For example, if the shuffling circuit 120 operates in the Benes network (BNS) scheme, a number of cases in which the permutation shuffling device 100 arranges a total of 2" different n-bits input index codes IDX_IN may be equal to a number of all cases in which an order of 2" input index codes IDX_IN is determined.

Orders in which the plurality of output index codes IDX_OUT are sorted within the first to M^{th} output order permutations OP_OUT_1 to OP_OUT_M may be different each other. For example, the orders in which the plurality of output index codes IDX_OUT are sorted in the first to M^{th} output order permutations OP_OUT_1 to OP_OUT_M may be referred to as first to M^{th} candidate sorting orders CSO_1 to CSO_M, respectively.

The order in which the plurality of output index codes IDX_OUT are sorted in the output order OP_out generated by the permutation shuffling device 100 based on the random codes RC, may be probabilistically determined as one of the first to M^{th} candidate sorting orders CSO_1 to CSO_M. For example, within the output order permutation OP_out generated based on random codes RC, a probability that the output index codes IDX_OUT will be sorted based on any specific candidate sort order CSO may be determined based on 'k'.

In some example embodiments, when 'k' is 'n', within the output order permutation OP_out generated based on any random codes RC, probabilities that the output index codes IDX_OUT are respectively sorted into the first to the M^{th} candidate sorting orders CSO_1 to CSO_M may be uniform. That is, when the shuffling circuit 120 operates in the butterfly network (BTFL) scheme, the probabilities that the permutation shuffling device 100 sorts the output index codes IDX_OUT into the first to M^{th} candidate sorting orders CSO_1 to CSO_M may be same each other. In other words, when the shuffling circuit 120 operates in the butterfly network (BTFL) scheme, numbers of combinations of the random codes RC that cause the permutation shuffling device 100 to sort the output index codes IDX_OUT into each of the first to M^{th} candidate sorting orders CSO_1 to CSO_M may be same each other.

In some example embodiments, when 'k' is '2n -1', within the output order permutation OP_out generated based on any random codes RC, probabilities that the output index codes IDX_OUT are respectively sorted into the first to the M^{th} candidate sorting orders CSO_1 to CSO_M may be different. That is, when the shuffling circuit 120 operates in the Benes network (BNS) scheme, the probabilities that the permutation shuffling device 100 sorts the output index codes IDX_OUT into each of the first to M^{th} candidate sorting orders CSO_1 to CSO_M may be different.

In some example embodiments, complexity of the output order permutation OP_out generated by the permutation shuffling device 100 may vary depending on a shuffling depth. For example, as the shuffling depth is larger, the output order permutation OP_out may be determined more randomly.

FIG. 15 illustrates an example showing a method for generating a plurality of random codes for use with the device of FIG. 1. Referring FIG. 1 to FIG. 15, the random code memory circuit 110 may receive the first to k^{th} random codes RC1 to RCk from a random code generation circuit RCGC. The random code generating circuit RCGC may be included within the permutation shuffling circuit 100, or may be a component external to the permutation shuffling circuit 100.

The random code generation circuit RCGC may receive a cryptographic key CK and a total length TL. For example, the random code generation circuit RCGC may receive the cryptographic key CK and the total length TL from a user.

The random code generation circuit RCGC may collectively generate the first to k^{th} random codes RC1 to RCk based on the cryptographic key CK and the total length TL. For example, the random code generation circuit RCGC may execute a hash function to generate a binary bit stream of code length corresponding to the total length TL based on the cryptographic key CK. In this case, the total length TL may be a product of a number of random codes (e.g., k) and a code length of each random code (e.g., 2").

That is, according to the embodiment of FIG. 15, the first to k^{th} random codes RC1 to RCk may be generated collectively (e.g., simultaneously) based on one cryptographic key CK, so entropy of the first to k^{th} random codes RC1 to RCk may be guaranteed.

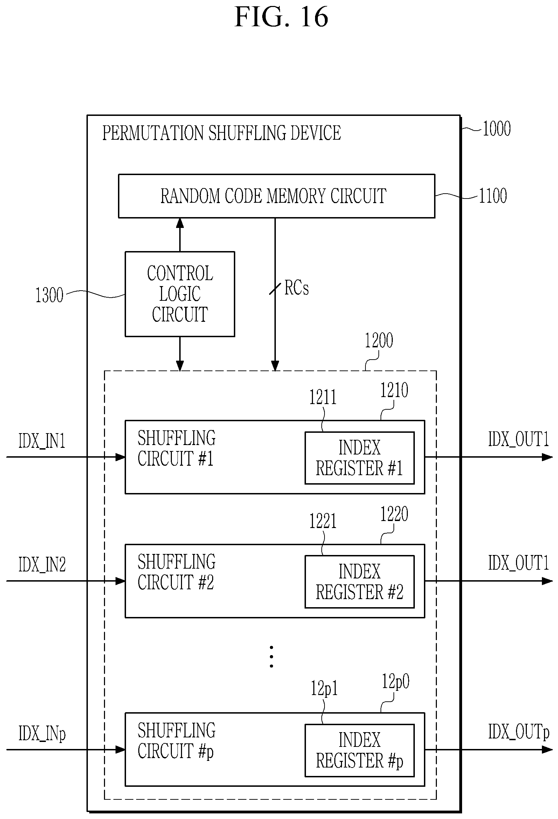

FIG. 16 illustrates a block diagram showing a configuration of a permutation shuffling device according to some example embodiments. Referring to FIG. 1 to FIG. 14 and FIG. 16, the permutation shuffling device 1000 may include a random code memory circuit 1100, a shuffling circuit array 1200, and a control logic circuit 1300. The shuffling circuit array 1200 may include first to p^{th} shuffling circuits 1210 to 12p0.

Each of the first to pth shuffling circuits 1210 to 12p0 may receive different input index codes IDX_IN included in one input order permutation OP_in. For example, the first to p^{th} shuffling circuits 1210 to 12p0 may receive the first to p^{th} input index codes IDX_IN1 to IDX_INp, respectively.

Each of the first to p^{th} shuffling circuits 1210 to 12p0 may share the random code memory circuit 1100. For example, the first to p^{th} shuffling circuits 1210 to 12p0 may respectively receive the plurality of random codes RC. That is, the plurality of random codes RC provided to the first to p^{th} shuffling circuits 1210 to 12p0 may be identical to each other.

The first to p^{th} shuffling circuits 1210 to 12p0 may each include first to p^{th} index registers 1211 to 12p1. Respectively based on the first to p^{th} index registers 1211 to 12p1, each of the first to p^{th} shuffling circuits 1210 to 12p0 may generate output index codes IDX_OUT by converting received input index code IDX_IN. For example, the first to p^{th} shuffling circuits 1210 to 12p0 may generate the first to p^{th} output index codes IDX_OUT1 to IDX_OUTp, respectively. In this case, the first to pth output index codes IDX_OUT1 to IDX_OUTp may be included in one output order permutation OP_out.

A configuration of the random code memory circuit 1100 is similar to that of the random code memory circuit 110 described above, and a configuration of each of the first to p^{th} shuffling circuits 1210 to 12p0 is similar to that of the shuffling circuit 120 described above, so a detailed description will be omitted.

That is, according to the embodiment, the permutation shuffling device 1000 may parallelly generate first to p^{th} output index codes IDX_OUT1 to IDX_OUTp based on the first to p^{th} shuffling circuits 1210 to 12p0. For example, the permutation shuffling device 1000 may generate two or more of the first to p^{th} output index codes IDX_OUT1 to IDX_OUTp together. In this case, performance of the permutation shuffling device 1000 may be improved because a time required to generate the output order permutation OP_out may be minimized.

In some example embodiments, 'p' may be an integer that is smaller than or equal to 2".

In some example embodiments, when 'p' is smaller than 2", at least some of the first to p^{th} shuffling circuits 1210 to 12p0 may generate output index codes IDX_OUT corresponding to two or more input index codes IDX_IN respectively. For example, the first shuffling circuit 1210 may generate an output index code IDX_OUT '0b010' corresponding to an input index code IDX_IN '0b000' during a first time period, and may generate an output index code IDX_OUT '0b011' corresponding to an input index code IDX_IN '0b011' during a second time period after the first time period. However, the scope is not limited thereto.

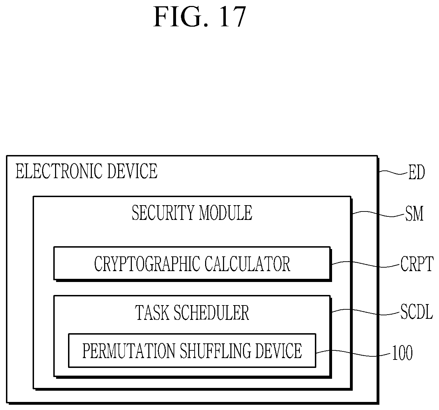

FIG. 17 illustrates a block diagram showing an electronic device including a permutation shuffling device according to some example embodiments. Referring to FIGS. 1 to 17, an electronic device ED may include a security module SM.

The security module SM may perform various security operations to secure the electronic device ED. For example, the security module SM may encrypt various types of operations performed by the electronic device ED.

The security module SM may include a cryptographic calculator CRPT and a task scheduler SCDL. The cryptographic calculator CRPT may perform various types of operations performed in the security module SM. The task scheduler SCDL may schedule various types of operations performed in the security module SM. For example, the task scheduler SCDL may determine an order of plurality of operations performed in the security module SM.

The task scheduler SCDL may include a permutation shuffling device 100 (or a permutation shuffling device 1000) according to some example embodiments. The task scheduler SCDL may shuffle the order of the plurality of operations performed in the security module SM based on the permutation shuffling device 100. In this case, the order of the plurality of operations performed in the security module SM may be performed randomly.

For a more concise description, FIG. 17 illustrates an example of a function of the shuffling circuit 100 included in a cryptographic module, but the scope is not limited thereto.

In some example embodiments, the security module SM may execute a post-quantum cryptography (PQC) algorithm. For example, the PQC algorithm may include a plurality of vector operations. However, the PQC algorithm may be executed regardless of an order in which the vector operations are performed. In this case, the PQC algorithm may be executed normally even if the task scheduler SCDL shuffles the order of the vector operations. However, example embodiments are not limited to a type of specific algorithm executed by the security module SM.

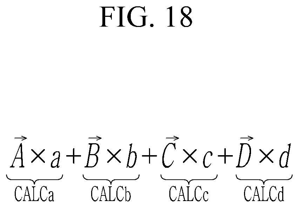

FIG. 18 illustrates an example of an operation performed in a security module of FIG. 17. Referring to FIGS. 1 to 18, the security module SM may perform first to fourth operations CALCa to CALCd. For a more concise description, it is assumed that the first operation CALCa is a product of A̅ and a, the second operation CALCa is a product of B̅ and b, the third operation CALCc is a product of C̅ and c, and the fourth operation CALCd is a product of D̅ and d. (Note that A̅, B̅, C̅, D̅ is assumed to be a different vector and a, b, c, d is assumed to be a different scalar value.) However, the scope is not limited to a specific type of each of the first to fourth operations CALCa to CALCd. For example, each of the first to fourth operations CALCa to CALCd may include various types of operations, such as a vector product operation, a scalar product operation, a matrix product operation, a sum operation, a logic operation, etc.

The security module SM may generate one operation result by performing the first to fourth operations CALCa to CALCd. For example, the cryptographic calculator CRPT may sequentially perform the first to fourth operations CALCa to CALCd, and then may generate a final operation result based on operation results of each of the first to fourth operations CALCa to CALCd (for example, by combining the operation results of each of the first to fourth operations CALCa to CALCd). In this case, the final operation results may be obtained regardless of the order in which the first to fourth operations CALCa to CALCd are performed. For example, the cryptographic calculator CRPT may be able to produce the same final operation result regardless of the order in which the first to fourth operations CALCa to CALCd are performed.

The task scheduler SCDL may shuffle the order in which the first to fourth operations CALCa to CALCd are performed. For example, the task scheduler SCDL may generate the output order permutation OP_out by shuffling the input order permutation OP_in corresponding to the order in which the first to fourth operations CALCa to CALCd are performed based on the permutation shuffling device 100. In this case, the task scheduler SCDL may sequentially perform the first to fourth operations CALCa to CALCd according to the order of the first to fourth operations CALCa to CALCd within the output order permutation OP_out.

For example, according to some example embodiments, the order in which the first to fourth operations CALCa to CALCd are performed may be randomly determined. In this case, even if a security attack (e.g., a side-channel attack) occurs from the outside while each of the first to fourth operations CALCa to CALCd is performed, it may be difficult for the security attacker to infer which operation among the first to fourth operations CALCa to CALCd was performed.

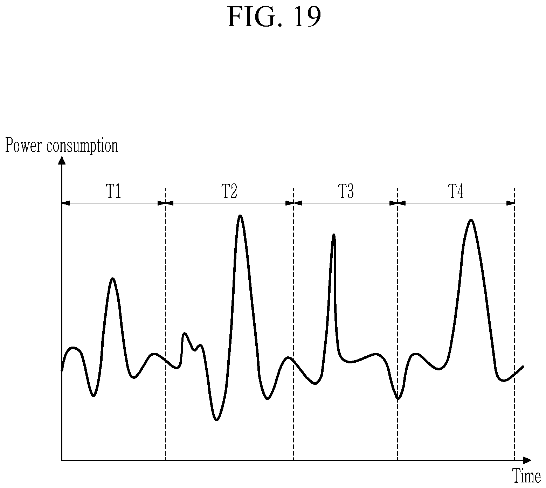

More specifically, at least some of the operands of the first to fourth operation CALCa to CALCd (e.g., one or more of A̅, B̅, C̅, D̅ and a, b, c, d) may include information that requires security (e.g., security code, encryption code, etc.). However, referring to FIG. 19 together, the first to fourth operations CALCa to CALCd may be performed sequentially during first to fourth time periods T1 to T4, respectively. A power consumption waveform of electronic device ED during the first to fourth time periods T1 to T4 may vary depending on which operand the operation is based on. In this case, the security attacker may infer which operand values are used in the cryptographic calculator CRPT during each of the first to fourth time periods T1 to T4 by analyzing the power consumption waveform. For example, the security attacker may infer at least some of the operands of the first to fourth operations CALCa to CALCd through the power consumption waveform analysis. However, according to some example embodiments, the order in which the first to fourth operations CALCa to CALCd are performed during the first to fourth time periods T1 to T4 may be randomly determined. In this case, even if the security attacker analyzes the power consumption waveform, it may be difficult to infer what operation is performed during the first to fourth time periods T1 to T4. Accordingly, security of the security module SM including the permutation shuffling device 100 according to some example embodiments may be significantly improved.

Any of the elements and/or functional blocks disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. The processing circuitry may include electrical components such as at least one of transistors, resistors, capacitors, etc. The processing circuitry may include electrical components such as logic gates including at least one of AND gates, OR gates, NAND gates, NOT gates, etc.

The above-described contents are specific embodiments for carrying out the present disclosure. Inventive concepts will include not only example embodiments described above, but also example embodiments that are simply designed or can be easily modified. Furthermore, inventive concepts will also include techniques that can be easily modified and implemented using examples embodiments. Accordingly, the scope should not be limited to the above-described embodiments, but should be defined not only by the claims described below but also by equivalents of the claims. Additionally, example embodiments are not necessarily mutually exclusive with one another. For example, some example embodiments may include one or more features described with reference to one or more figures, and may also include one or more other features described with reference to one or more other figures.

## Claims

1. A permutation shuffling device comprising:
a random code memory circuit configured to store first to n^{th} random codes, where n is an integer greater than or equal to 2; and
a first shuffling circuit configured to receive a first input index code from outside, the first input index code including first to n^{th} input index bits, and to generate a first output index code by updating the first to n^{th} input index bits based on the first to n^{th} random codes, respectively.

2. The permutation shuffling device of claim 1, wherein the first shuffling circuit includes an index register, the index register including first to n^{th} index bit fields respectively storing first to n^{th} input index bits; and wherein the shuffling circuit is configured to sequentially update the first to n^{th} index bit fields based on the first to n^{th} random codes, respectively.

3. The permutation shuffling device of claim 1 or 2, wherein the first shuffling circuit further includes:
a multiplexer configured to extract first to n^{th} operand random bits from the first to n^{th} random codes, respectively; and
a bit flip circuit configured to respectively update the first to n^{th} index bit fields based on the first to n^{th} operand random bits.

4. The permutation shuffling device of claim 3, wherein the multiplexer is configured to:
extract the first to n^{th} operand random bits respectively based on index bits stored in the index register at the first to n^{th} time points.

5. The permutation shuffling device of any one of claims 1 to 4, wherein:
the random code memory circuit is configured to store (n+1)^{th} to (2n-1)^{th} random codes, and
the first shuffling circuit is configured to respectively update the (n-1)^{th} to first index bit fields based on the (n+1)^{th} to (2n-1)^{th} random codes.

6. The permutation shuffling device of any one of claims 1 to 5, wherein the permutation shuffling device is configured to:
receive a plurality of input index codes, the plurality of input index codes including the first input index code included in a first input order permutation; and
generate a plurality of output index codes, the plurality of output index codes including the first output index code based on the first to n^{th} random codes, the plurality of output index codes included in a first output order permutation.

7. The permutation shuffling device of claim 6, wherein:
a sorting order of the plurality of output index codes within the first output order permutation is one of a plurality of candidate sorting orders based on the first to n^{th} random codes,
as the first to n^{th} random codes are changed, each of the plurality of candidate sorting orders has a uniform probability of being determined as the sorting order.

8. The permutation shuffling device of claim 6 or 7, further comprising:
a second shuffling circuit which is configured to
receive a second input index code from the outside, the second input index code including (n+1)^{th} to 2n^{th} input index bits and being one of the plurality of input index codes, and
generate a second output index code by updating the (n+1)^{th} to (2n)^{th} input index bits based on the first to n^{th} random codes, the second output index code being one of the plurality of output index codes.

9. A shuffling circuit comprising:
an index register including first to n^{th} index bit fields where n is an integer that is greater than or equal to 2;
a split circuit configured to output a target index bit stored in a target index bit field, the target index bit field being one of the first to n^{th} index bit fields, and to output an operand selection code generated based on index bits stored in non-target index bit fields other than the target index bit field among the first to n^{th} index bit fields;
a multiplexer configured to output, based on the operand selection code, an operand random bit included in a random code provided from outside; and
a bit flip circuit configured to generate an update bit based on the target index bit and the operand random bit, and to update the target index bit field based on the update bit.

10. The shuffling circuit of claim 9, wherein the split circuit is configured to generate the operand selection code based on a result of rotating the index bits stored in the first to n^{th} index bit fields.

11. The shuffling circuit of claim 10, wherein the split circuit is configured to generate the operand selection code by left rotating the index bits stored in the first to n^{th} index bit fields based on a number of index bit fields having a higher position value than the target index bit field among the non-target index bit fields, and to delete the target index bit.

12. The shuffling circuit of claim 9, wherein the split circuit is configured to generate the operand selection code by concatenating index bits stored in the non-target index bit fields.

13. The shuffling circuit of any one of claims 9 to 12, wherein a code length of the random code is 2ⁿ⁻¹.

14. The shuffling circuit of claim 13, wherein the multiplexer is configured to output a random bit having a position corresponding to a value of the operand selection code among 2ⁿ⁻¹ random bits included in the random code, as the operand random bit.

15. The shuffling circuit of any one of claims 9 to 14, wherein the bit flip circuit includes an XOR gate including:
a first input terminal configured to receive the target index bit,
a second input terminal configured to receive the operand random bit, and
an output terminal configured to provide the update bit to the target index bit field.
